(19) Europäisches Patentamt / European Patent Office / Office européen des brevets

(11) **EP 3 455 612 B1**

(12) **EUROPÄISCHE PATENTSCHRIFT**

(45) Veröffentlichungstag und Bekanntmachung des Hinweises auf die Patenterteilung:
**23.04.2025 Patentblatt 2025/17**

(21) Anmeldenummer: **17722439.1**

(22) Anmeldetag: **09.05.2017**

(51) Internationale Patentklassifikation (IPC):
**G01N 21/3504** $^{(2014.01)}$  **G01N 21/03** $^{(2006.01)}$

(52) Gemeinsame Patentklassifikation (CPC):
**G01N 21/3504; G01N 21/031**

(86) Internationale Anmeldenummer:
**PCT/EP2017/061059**

(87) Internationale Veröffentlichungsnummer:
**WO 2017/194540 (16.11.2017 Gazette 2017/46)**

(54) **MESSEINRICHTUNG UND VERFAHREN ZUR ERFASSUNG UNTERSCHIEDLICHER GASE UND GASKONZENTRATIONEN**

MEASURING DEVICE AND METHOD FOR DETECTING DIFFERENT GASES AND GAS CONCENTRATIONS

DISPOSITIF ET PROCÉDÉ DE MESURE DES GAZ ET DES CONCENTRATIONS DE GAZ DIFFÉRENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2016 DE 102016108544**
**09.05.2016 DE 102016108545**

(43) Veröffentlichungstag der Anmeldung:
**20.03.2019 Patentblatt 2019/12**

(73) Patentinhaber: **Infrasolid GmbH**
**01217 Dresden (DE)**

(72) Erfinder:
• **SCHOSSIG, Marco**
**01156 Dresden (DE)**
• **NORKUS, Volkmar**
**01705 Pesterwitz (DE)**
• **OTT, Tobias**
**01217 Dresden (DE)**

(74) Vertreter: **Lippert Stachow Patentanwälte Rechtsanwälte Partnerschaft mbB Krenkelstraße 3 01309 Dresden (DE)**

(56) Entgegenhaltungen:
EP-A1- 1 482 301 CN-U- 203 908 940
JP-A- 2006 275 632 US-A- 3 797 942
US-A- 5 222 389 US-A1- 2006 009 707

**Beschreibung**

Die Erfindung betrifft eine Messeinrichtung zur Erfassung unterschiedlicher Gase und Gaskonzentrationen, welche eine Strahlungsquelle, einen einen optischen Pfad und einen Gaswechselwirkungsweg aufweisenden Messkanal sowie entlang des Messkanals angeordnete Strahlungsdetektoren umfasst.

Die Erfindung betrifft auch ein Verfahren zur Messung von Gasen und Gaskonzentrationen, welches die erfindungsgemäße Messeinrichtung nutzt.

Es gibt zwei grundlegende Arten von Gassensoren: wechselwirkende und nicht-wechselwirkende Gassensoren. Bei ersteren muss ein Gas physikalisch oder chemisch mit einem Sensorelement wechselwirken. Dabei kommt das Gas mit einer oder mehreren Komponenten, z. B. Elektroden, Elektrolyten oder Sensoroberflächen des Gassensors über z.B. Oxidation, Reduktion oder physikalische Adsorption in Kontakt. Diese Wechselwirkungen führen zwangsläufig zu einer Veränderung des Gassensors, d.h. einer Veränderung von Sensorparametern in Abhängigkeit von der wechselwirkenden Komponente des Sensors, z.B. Veränderung des mit dem Gas in Wechselwirkung stehenden Elektrolyten, wodurch eine regelmäßige Kalibrierung und letztlich der Austausch des Gassensors notwendig werden. Die am häufigsten eingesetzten wechselwirkenden Gassensoren sind z.B. elektrochemische Sensoren, Festkörpersensoren und katalytische Sensoren.

Nicht-wechselwirkende, auch als wechselwirkungsfrei bezeichnete Gassensoren sind optische Gassensoren. Hierbei kommt nur elektromagnetische Strahlung mit dem Gas in Kontakt bzw. tritt mit diesem in Wechselwirkung, wobei ein Teil der Strahlung von den Gasmolekülen absorbiert wird und die Gasmoleküle ihren Anregungszustand daraufhin ändern. Durch Kollisionen mit anderen Gasmolekülen oder der Probenkammer kehren die angeregten Gasmoleküle jedoch umgehend in ihren Grundzustand zurück, so dass sich der Zustand des Gases weder physikalisch noch chemisch ändert. Die Wellenlänge λ der elektromagnetischen Strahlung reicht dabei vom ultravioletten bis in den fernen infraroten Spektralbereich (λ = 0,2 μm bis 20 μm). Dabei sind Nicht-Dispersive-Infrarot- (NDIR-) Gassensoren die am meisten genutzten wechselwirkungsfreien Gassensoren. Neben dem einfachen Aufbau zeichnen sie sich vor allem durch eine hohe Messauflösung, eine lange Lebensdauer und gute Langzeitstabilität aus. Das Verfahren nutzt die Anregung von Energiezuständen in Molekülen, d. h. die Schwingungsanregung von Molekülbindungen, durch Infrarotstrahlung. Bei diesen molekülspezifischen Rotations- und Schwingungsfrequenzen wird infrarote Strahlung absorbiert. Aufgrund des individuellen molekularen Aufbaus besitzt jedes Molekül sehr spezifische Absorptionsbanden im infraroten Spektralbereich, wodurch es eindeutig identifiziert werden kann. Dabei ist der infrarote Spektralbereich λ = (2 ... 20) μm von technischem Interesse, weil in diesem Spektralbereich die charakteristischen Absorptionsbanden vieler Verbindungen liegen.

Der erste praktisch einsetzbare NDIR-Gassensor wurde 1938 entwickelt und ist in der Patentschrift DE730478 beschrieben. Bei diesem Aufbau wird die von zwei Strahlungsquellen ausgehende Strahlung durch ein motorgetriebenes Blendenrad periodisch unterbrochen und in zwei voneinander getrennte Rohre geführt. In dem einen Rohr befindet sich das zu messende Gas bzw. Gasgemisch und in dem anderen Rohr ein Referenzgas. Danach tritt die Strahlung in zwei Messkammern ein, welche als Empfängerschicht das Gas enthalten, das detektiert werden soll. Diese beiden Messkammern sind durch eine dünne Membran gasdicht voneinander getrennt. Gasdicht bedeutet, dass kein Gas zwischen den Kammern ausgetauscht wird. Die Membran bildet mit einer isoliert angeordneten Gegenplatte einen elektrischen Kondensator, dessen Kapazität mit einem Messinstrument ablesbar ist. Die Absorption der Infrarotstrahlung durch das Gas wird folglich als Druckdifferenz mittels eines sehr sensitiven Mikrofons detektiert. Wesentliche Nachteile dieses als photoakustische Gasmesszelle bekannten NDIR-Gassensors sind seine Baugröße und die mechanische Anfälligkeit gegenüber Vibrationen und Stößen.

Mit der Entwicklung von nicht-dispersiven, sehr schmalbandigen optischen Filtern stand schließlich eine Technologie zur Verfügung, die deutlich kleinere und robustere NDIR-Gasmessgeräte ermöglichte. Diese sogenannten Interferenzfilter nutzen den Effekt der Interferenz, um elektromagnetische Strahlung frequenz- bzw. wellenlängenabhängig zu filtern. Bei einer Ausführung als Bandpassfilter wird ein bestimmtes Wellenlängenband transmittiert, während kürzere und längere Wellenlängen reflektiert oder absorbiert werden. Das Transmissionsmaximum ist als die Zentrums-Wellenlänge (ZWL) des Bandpassfilters definiert. Die Bandbreite des Filters wird mit der Halbwertsbreite (FWHM - Full Width at Half Maximum) angegeben, d.h. die Differenz zwischen den beiden Argumentwerten, für die die Funktionswerte auf die Hälfte des Maximums abgesunken sind. Das Transmissionsspektrum des Bandpass-Interferenzfilters wird schließlich so gewählt, dass es einer charakteristischen Absorptionsbande des zu messenden Gases entspricht. Die Absorption der Infrarotstrahlung durch das Messgas wird dabei mit einem sehr sensitiven Strahlungsdetektor gemessen, der hinter dem Bandpass-Interferenzfilter angeordnet ist.

Die durch das Gas bewirkte Strahlungsschwächung aufgrund von Strahlungsabsorption ist schließlich ein Maß für die Gaskonzentration. Die Strahlungsintensität $I_M$ der Messwellenlänge verändert sich dabei in Abhängigkeit von der Gaskonzentration c nach dem Lambert-Beerschen-Gesetz:

$$I_M = I_0 \cdot e^{\alpha \cdot c \cdot l}$$

wobei $\alpha$ den gasspezifischen Absorptionskoeffizienten, l die Absorptionsweglänge und $I_0$ die Grundintensität der Strahlung, d. h. bei Abwesenheit des Messgases (c = 0), bezeichnen.

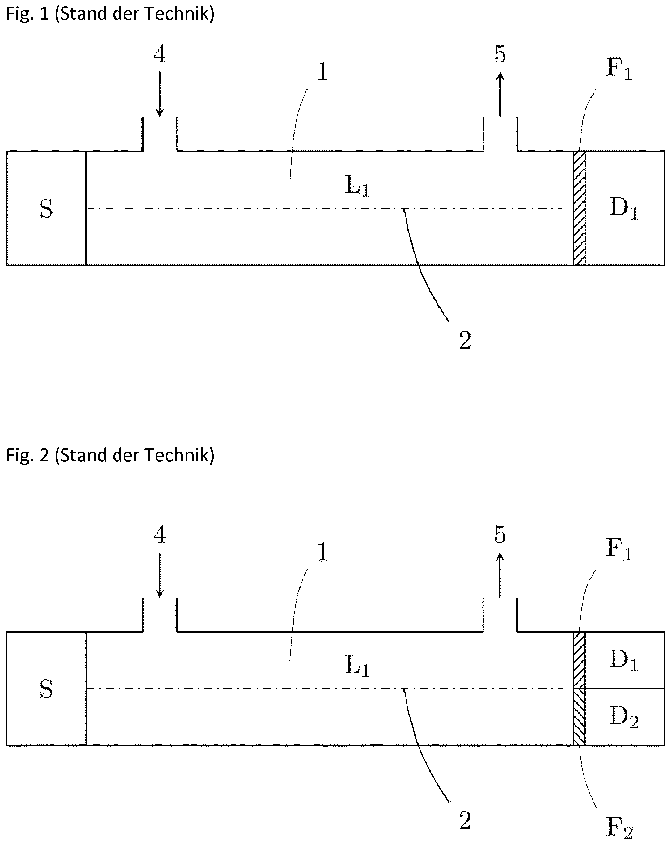

Ein einfacher NDIR-Gassensor besteht folglich aus einer Infrarotstrahlungsquelle, einer Messkammer (Küvette), in der sich das zu messenden Gas oder Gasgemisch befindet, sowie einem Infrarotdetektor mit Bandpass-Interferenzfilter, dessen Transmissionsspektrum der Absorptionsbande des zu messenden Gases entspricht (Fig. 1). Diese Komponenten sind entlang einer optischen Achse montiert. Ein solcher Aufbau wird beispielsweise in den Druckschriften DE10221708B4 und DE10013374A1 beschrieben. Als Infrarotstrahlungsquelle wird in der Regel ein elektrisch modulierbarer thermischer Strahler verwendet, der aufgrund seiner Temperatur elektromagnetische Strahlung mit einem kontinuierlichen Spektrum aussendet, in dem alle Wellenlängen des technisch interessanten Spektralbereichs $\lambda = (2 ... 20)\ \mu m$ enthalten sind. Als Infrarotdetektor steht eine breite Palette mit ausreichendem Signal-Rausch-Abstand und geringem Preis zur Verfügung, z. B. Thermopile-Sensoren und pyroelektrische Detektoren.

Moderne NDIR-Gassensoren, wie sie beispielsweise aus den Schriften DE 10 2008 005 572 B4, DE 20 2005 010 475 U1, DE 102 21 708 B4 und DE 296 02 282 U1 bekannt sind, werden meist nach dem sogenannten Zweifrequenzverfahren betrieben (Fig. 2). Dabei wird neben der Messung bei einer auf das Messgas abgestimmten Messwellenlänge zusätzlich bei einer zweiten Wellenlänge, der sogenannten Referenzwellenlänge, gemessen, die in einem Spektralbereich liegt, in dem keine Absorption durch andere im Gasgemisch oder in der Umgebung vorhandene Gase stattfindet. Dazu sind zwei im Strahlengang angeordnete Infrarotdetektoren mit unterschiedlichen Bandpass-Interferenzfiltern notwendig. Mittels Quotientenbildung der beiden Detektorsignale wird dabei eine wesentliche Stabilitätsverbesserung erreicht, wodurch beispielsweise Signaländerungen aufgrund von Intensitätsdriften der Strahlungsquelle oder Schmutzablagerung in der Messkammer kompensiert werden können. Nachteilig ist allerdings die notwendige Aufteilung des von der Strahlungsquelle emittierten Strahlungsflusses auf die beiden Infrarotdetektoren, wodurch die Strahlungsintensität am Infrarotdetektor und damit die Nachweisgrenze des Gassensors verringert werden. Figur 2 zeigt das Zweifrequenzverfahren nach dem Stand der Technik und die notwendige Aufteilung der von der Strahlungsquelle S emittierten Strahlung auf die Detektoren D1 und D2.

Mit den oben genannten Messverfahren und dazu geeigneten Messvorrichtungen kann allerdings nur ein Gas gemessen werden. In vielen gasanalytischen Anwendungen, z.B. bei einer Abgas-, Rauchgas- oder Anästhesiegasmessung, ist es aber notwendig, mehrere Gase simultan zu erfassen und deren Konzentrationen im Gasgemisch zu bestimmen.

In der US 2012/0235038 A1 wird ein sogenannter Multispektraldetektor für NDIR-Gassensoren vorgestellt, der eine Vielzahl an Detektorelementen mit Bandpass-Interferenzfilter besitzt. Dies ermöglicht einen einfachen Aufbau des Gassensors entsprechend dem oben beschriebenen Zweifrequenzverfahren für eine gleichzeitige Messung mehrerer Gase. Ähnliche Anordnungen sind auch aus den Schriften DE 34 06 175 A1, DE 41 33 481 A1, US 6,201,245 B1 und DE 101 40 998 C2 bekannt. Wesentliche Nachteile derartiger NDIR-Gassensoren mit Multispektraldetektor sind eine konstante Absorptionsweg- bzw. Küvettenlänge für alle Spektralkanäle und die Verteilung der Strahlungsintensität auf die einzelnen Detektorelemente. So stehen beispielsweise bei einem 4-Kanaldetektor im Idealfall nur 25 % der einfallenden Strahlungsintensität pro Detektorelement zur Signalerzeugung zur Verfügung. In der Realität sind es meist weniger als 10 %. Folglich wird die Nachweisgrenze des Gassensors bei allen zu messenden Gasen stark verringert.

Eine konstante Absorptionsweglänge für alle Spektralkanäle begrenzt zum einen den Messbereich und zum anderen die Nachweisgrenze des Gassensors. Das ergibt sich daraus, dass erstens jedes Gas einen gasspezifischen Absorptionskoeffizienten besitzt, zweitens Gase meist in unterschiedlichen Konzentrationen in einem Gasgemisch vorliegen und drittens Gase eine unterschiedliche Toxizität besitzen, weshalb unterschiedliche Grenzwerte gelten, die wiederum unterschiedliche Messauflösungen erfordern. So liegen beispielsweise die im Rauchgas einer Ölfeuerung enthaltenen Atemgifte Kohlenstoffdioxid ($CO_2$), Schwefeldioxid ($SO_2$), Stickstoffmonoxid (NO) und Kohlenstoffmonoxid (CO) in folgenden Konzentrationen vor:

- (125000 ... 140000) ppm $CO_2$,

- (180 ... 220) ppm $SO_2$,

- (80 ... 150) ppm CO und

- (50 ... 100) ppm NO.

[0013] Die maximalen Arbeitsplatzkonzentrationen (MAK-Werte) dieser Rauchgasbestandteile können den technischen Regeln für Gefahrstoffe (TRGS 900) entnommen werden und betragen:

- 5000 ppm für $CO_2$,

- 0,5 ppm für $SO_2$,

- 25 ppm für NO und

- 30 ppm für CO.

Folglich ist die durch das Gas nach dem Lambert-Beerschen-Gesetz bewirkte Strahlungsschwächung aufgrund von Strahlungsabsorption für jedes Gas individuell und deshalb eine individuelle Absorptionsweglänge sinnvoll, damit eine genaue Konzentrationsbestimmung erfolgen kann. Andernfalls muss immer ein Kompromiss hinsichtlich Messbereich und Messauflösung eingegangen werden.

In der DE19604167A1 wird eine Gassensoreinrichtung zur Erfassung der Gaskonzentrationen in einem komplexen Gasgemisch vorgeschlagen, bei der die einzelnen Strahlungsdetektoren rotationssymmetrisch um eine Strahlungsquelle angeordnet sind, wobei die Entfernung zur Strahlungsquelle und damit die Absorptionsweglänge variieren kann. Wesentlicher Nachteil dieser Anordnung bleibt die Aufteilung des emittierten Strahlungsflusses auf eine Vielzahl an Strahlungsdetektoren, wodurch nur ein sehr geringer Bruchteil der Strahlungsintensität an den Detektoren ankommt und die Nachweisgrenze der Gassensoreinrichtung stark verringert wird. Gleiches gilt für die in US5222389A beschriebene Anordnung, bei der zur Realisierung unterschiedlicher Absorptionsweglängen die einzelnen Strahlungsdetektoren entlang der Messkammer angeordnet sind. Jedoch ist auch dort ein wesentlicher Nachteil, dass stets nur ein Bruchteil der Messstrahlung auf die Detektoren trifft, der zudem abhängig von der jeweiligen Reflexion an der Messkammerwand ist.

Aus der KR 1020100052691 A ist weiterhin ein NDIR-Gassensor mit nur einem Strahlungsdetektor bekannt, bei dem die Wahl der Messwellenlänge durch ein Filterrad erfolgt. Dieses Filterrad kann entsprechend der zu messenden Gase mit passenden Bandpass-Interferenzfiltern bestückt werden, wodurch sich mit einem einfachen Aufbau eine Vielzahl an Gasen identifizieren lassen. Dies kann aber nur sequentiell erfolgen. Eine gleichzeitige Erfassung der Konzentration von unterschiedlichen Gasen in einem Gasgemisch ist nicht möglich. Zudem ist die Absorptionsweglänge für jedes Gas gleich und die Anordnung lässt sich nur schlecht miniaturisieren. Eine weitere Anordnung zur sequentiellen Erfassung von Gasen ist in der US 3,797,942 offenbart.

Für eine Verbesserung der Nachweisgrenze von optischen Gassensoren ist es erforderlich, möglichst hohe Strahlungsintensitäten auf den Strahlungsdetektor zu fokussieren. Weiterhin ist für jedes Messgas eine individuelle Absorptionsweglänge bereitzustellen, damit eine optimale Bestimmung der einzelnen Gaskonzentrationen in einem komplexen Gasgemisch erfolgen und die Baugröße des Gassensors minimal gehalten werden kann. Für viele Anwendungen ist zudem eine gleichzeitige Bestimmung der Komponenten in einem Gasgemisch erforderlich.

Es ist daher Aufgabe der vorliegenden Erfindung, eine optische Messeinrichtung mit einer deutlich verbesserten Nachweisgrenze bereitzustellen, die kompakt und einfach aufgebaut sowie kostengünstig herstellbar ist. Die Messeinrichtung soll ohne Strahlungsintensitätsverluste auskommen und eine individuell einstellbare Absorptionsweglänge für unterschiedliche gasspezifische Absorptionskoeffizienten und Gaskonzentrationen aufweisen, wobei eine gleichzeitige Bestimmung der Konzentration von unterschiedlichen Gasen in einem Gasgemisch möglich sein soll.

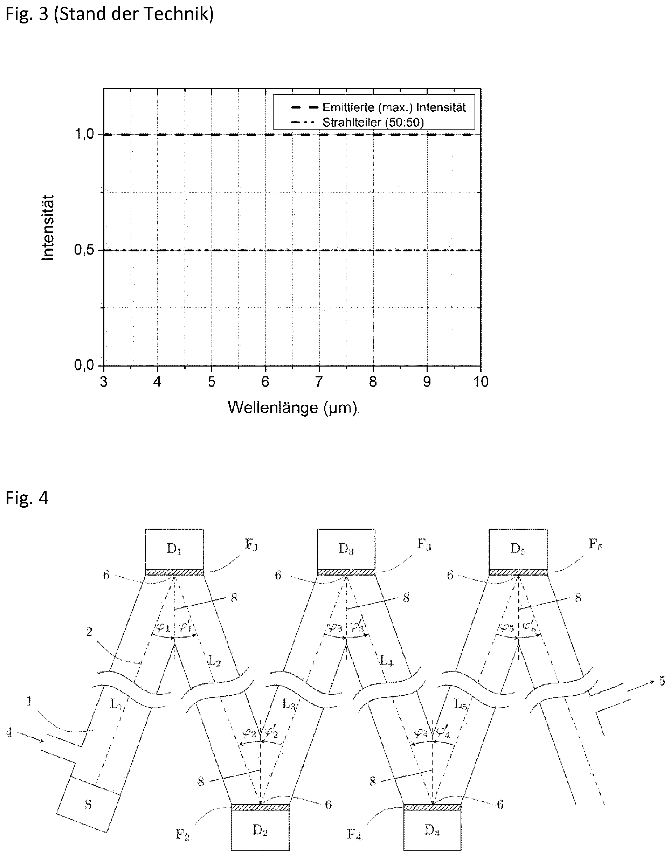

Die Aufgabe wird anordnungsseitig durch eine Messeinrichtung gemäß dem unabhängigen Anspruch 1 gelöst. Bei der erfindungsgemäßen Messeinrichtung weist der optische Pfad mindestens zwei Umlenkpunkte auf, wobei an einem ersten Umlenkpunkt ein erstes Schmal-Bandpass-Interferenzfilter und dem Schmal-Bandpass-Interferenzfilter ein erster Strahlungsdetektor unmittelbar nachgeordnet angeordnet ist und wobei der optische Pfad und der Gaswechselwirkungsweg im Messkanal identisch sind. Ein Umlenkpunkt definiert eine Grenze des Messkanals und begrenzt die wechselwirkende Messkanallänge, d.h. die Absorptionsweglänge eines spezifisch zu messenden Gases. Der Gaswechselwirkungsweg ist der Weg, auf dem das zu messende Gas oder Gasgemisch im Messkanal mit der Strahlung wechselwirkt. An dem Umlenkpunkt im optischen Pfad trifft die Messstrahlung auf einen ersten Schmal-Bandpass-Interferenzfilter, wobei nur Strahlung einer durch das erste Schmal-Bandpass-Interferenzfilter vorgegebenen Wellenlänge auf einen dem Schmal-Bandpass-Interferenzfilter nachgeordneten Strahlungsdetektor trifft, d.h. nur ein bestimmtes schmales Wellenlängenband wird durch das Filter transmittiert, während kürzere und längere Wellenlängen reflektiert werden. Schmalbandig bedeutet im Sinne dieser Beschreibung ein Wellenband von < 10% der Zentrumswellenlänge des Schmal-Bandpass-Interferenzfilters. Das Transmissionsmaximum ist dabei als die Zentrums-Wellenlänge des Schmal-Bandpass-Interferenzfilters (ZWL) definiert. Das Transmissionsspektrum des Schmal-Bandpass-Interferenzfilters wird dabei so gewählt, dass es einer charakteristischen Absorptionsbande des zu messenden Gases entspricht. Die Absorption der Infrarotstrahlung durch das Messgas wird dabei mit einem sehr sensitiven Strahlungsdetektor gemessen, der hinter dem Schmal-Bandpass-Interferenzfilter angeordnet ist. Die am Filter reflektierte Strahlung wird ab dem Umlenkpunkt im Messkanal weitergeleitet, bis sie auf den nächsten Umlenkpunkt trifft. Damit und dass der Gaswechselwirkungsweg und der optische Pfad identisch, d.h. deckungsgleich zueinander sind, wird ebenfalls gewährleistet, dass keinerlei Strahlungsteiler in der Messeinrichtung erforderlich ist, um die Strahlung auf mehrere Strahlungsdetektoren zu leiten oder um Strahlung, die für eine spezifische Gasdetektion gebraucht wird, aufzuteilen und um diese einem separaten Detektor für die Messung zur Verfügung zu stellen. Ein Strahlungsteiler teilt die von der Strahlungsquelle emittierte Strahlungsleistung wellenlängenunabhängig in zwei Anteile auf und reduziert entsprechend die Strahlungsintensität (Fig. 3). Der Verzicht auf Strahlungsteiler hat den besonderen Vorteil, dass die Strahlungsintensität der Strahlungsquelle nicht wie im Stand der Technik auf verschiedene Detektoren aufgeteilt werden muss, sondern auf jeden Strahlungsdetektor die maximale Strahlungsintensität trifft. Damit wird eine wesentlich verbesserte Auflösung erreicht, weil das Signal am Detektor größer ist.

Der optische Pfad von der Strahlungsquelle bis zum ersten Umlenkpunkt weist eine Absorptionsweglänge $L_1$ auf. Die Absorptionsweglänge L ist entsprechend dem nachzuweisenden Gas auszubilden. Diese Notwendigkeit ergibt sich daraus, dass jedes Gas einen gasspezifischen Absorptionskoeffizienten besitzt und Gase meist in unterschiedlichen Konzentrationen in einem Gasgemisch vorliegen. Zudem ist aufgrund von z.B. einer gasspezifischen Toxizität eine gasspezifische Messauflösung notwendig.

Folglich ist für jedes Gas eine individuelle Absorptionsweglänge bzw. Messkanallänge erforderlich, damit die Messeinrichtung auf die erforderlichen Messauflösungen und Messbereiche der zu messenden Gase abgestimmt werden kann.

In sämtlichen Ausgestaltungen der erfindungsgemäßen Messeinrichtung weist der optische Pfad der Messeinrichtung N Umlenkpunkte auf, wobei von der Strahlungsquelle bis zum N-ten Umlenkpunkt der optische Pfad eine Absorptionsweglänge $L_N$ aufweist, wobei N eine natürliche Zahl größer 1 ist. D.h. durch die Anzahl der Umlenkpunkte kann die Absorptionsweglänge des optischen Pfades und damit die Länge des Gaswechselwirkungswegs individuell eingestellt werden, so dass unterschiedliche Gase mit unterschiedlichen Absorptionsweglängen zeitgleich gemessen werden können. Das zu untersuchende Gas kann über die gesamte Länge des optischen Pfades in den Messkanal eingeleitet werden. Weiterhin weist erfindungsgemäß das Schmal-Bandpass-Interferenzfilter eine optische Achse auf, wobei der optische Pfad und die optische Achse eines N-ten Schmal-Bandpass-Interferenzfilters $F_N$ einen Winkel $\varphi_N$ einschließen.

Durch den Winkel $\varphi$ ist zum einen eine kompakte Bauweise der Messeinrichtung möglich und zum anderen wird die am Schmal-Bandpass-Interferenzfilter $F_N$ reflektierte Messstrahlung vollständig auf das im Messkanal nachfolgende Filter $F_{N+1}$ geleitet. Damit ist garantiert, dass auf jeden Detektor die maximale Strahlungsintensität trifft. Der Winkel $\varphi$ hat eine Größe von größer 0° bis kleiner 50°, noch bevorzugter in einem Bereich von 30° bis 50°. Der Winkel kann für jeden Umlenkpunkt N individuell eingestellt werden.

Für eine optimierte Strahlungsdetektion am Strahlungsdetektor kann zwischen dem Schmal-Bandpass-Interferenzfilter und dem Strahlungsdetektor ein Strahlungskonzentrator angeordnet werden, wobei diese Ausgestaltung nicht unter den Schutzumfang der Ansprüche fällt.

Dieser Strahlungskonzentrator stellt eine Art Kollimator dar und ist derart ausgebildet, dass die durch das Filter transmittierte Strahlung möglichst vollständig auf den Strahlungsdetektor geleitet wird.

Vorteilhaft ist, wenn das Substratmaterial des Schmal-Bandpass-Interferenzfilters aus Silizium (Si), Germanium (Ge), Calciumfluorid ($CaF_2$), Bariumfluorid

($BaF_2$) oder Zinkselenid (ZnSe) besteht. Diese Materialien weisen insbesondere im infraroten Spektralbereich einen besonders hohen Transmissionsgrad auf, so dass entsprechend des verwendeten Schmal-Bandpass-Interferenzfilters ein hoher Strahlungsanteil auf den dahinterliegenden Detektor trifft. Es sind aber auch andere Substratmaterialien einsetzbar und / oder verwendbar.

Um die Absorptionsweglänge weiter variabel einstellbar auszuführen, ist erfindungsgemäß an einem zweiten weiteren Umlenkpunkt ein optischer Spiegel zur Verlängerung des optischen Pfades, d.h. der Absorptionsweglänge, anordbar. Damit lässt sich die Weglänge der Messstrahlung durch die Anordnung von Spiegeln an den Umlenkpunkten in dem Messkanal variabel auf $L = L_1 + L_2 + ... + L_N$ verlängern, je nachdem welche Absorptionsweglänge L für das zu detektierende Gas erforderlich ist.

Weiterhin ist an einem zweiten weiteren Umlenkpunkt erfindungsgemäß ein Referenzdetektor anordbar. Das hat den Vorteil, dass damit beispielsweise Änderungen in der Intensität der Strahlungsquelle oder Verunreinigungen im Messkanal überwacht werden können. Beispielsweise erfolgt bei ca. 4 μm Wellenlänge keine Absorption durch Gase. Diese Wellenlänge kann von einem Referenzdetektor genutzt werden, um Veränderungen in der Messeinrichtung, die nicht durch das zu untersuchende Gas bewirkt werden, zu detektieren. Aufgrund von Änderungen der detektierten Signale durch die Strahlungsdetektoren und einen Referenzdetektor kann ermittelt werden, inwiefern sich Änderungen beispielsweise durch Alterung oder einer Drift der Strahlungsquelle oder aufgrund von Ablagerungen z.B. an den optischen Spiegeln durch das zu messende Gas im Messkanal hervorgerufen werden. Durch die synchron zur Gaskonzentrationsmessung erfolgende Referenzmessung wird die Langzeitstabilität der Gaskonzentrations- bzw. Gasmessung verbessert und der Wartungsaufwand für den Gassensor verringert, da weniger oft kalibriert werden muss.

Problematisch bei dieser Art der Referenzmessung ist, dass spektrale Änderungen im Strahlungsfluss nicht oder nur unzureichend kompensiert werden können, insbesondere dann, wenn die Absorptionswellenlänge des Gases nicht in der Nähe der Referenzwellenlänge liegt.

Damit spektrale Änderungen im Strahlungsfluss durch z.B. Ablagerungen im optischen Messkanal, Intensitätsdriften und Emissionsgradänderungen der Strahlungsquelle sowie Umgebungstemperatureinflüsse vollständig kompensiert und dabei auch die Langzeitstabilität von NDIR-Gassensoren deutlich verbessert und der Wartungs- und Kalibrieraufwand und die damit verbundenen Kosten minimiert werden können und eine kompakte Bauweise realisiert werden kann, ist es besonders vorteilhaft, wenn die Referenzmessung auf der Absorptionswellenlänge des zu messenden Gases erfolgt. Bei dieser erfindungsgemäßen Art der Referenzmessung ist der Referenzdetektor mit dem Referenz-Schmal-Bandpass-Interferenzfilter im Messkanal nach dem Strahlungsdetektor für das zu messende Gas angeordnet. Dabei weist der Referenz-Schmal-Bandpass-Interferenzfilter eine größere Bandbreite als das Schmal-Bandpass-Interferenzfilter für das zu messende Gas auf, wobei die Transmissionsbereiche der beiden Filter überlappend sind und der Referenz-Schmal-Bandpass-Interferenzfilter immer einen Bereich außerhalb der Absorptionsbande des zu messenden Gases auf den Referenzdetektor transmittiert.

Unter der Überlappung des Schmal-Bandpass-Interferenzfilters vor einem Referenzdetektor und des Schmal-Bandpass-Interferenzfilters vor einem Strahlungsdetektor wird dabei ein spektraler Bereich verstanden, in dem sich die Durchlassbereiche der beiden Filter teilweise, aber nicht zwangsläufig vollständig, überdecken. Eine Überlappung liegt demnach vor, wenn sich die Bandpässe der verwendeten Filter teilweise überdecken, so dass sich eine gemeinsame Schnittfläche im spektralen Bereich ausbildet.

Besonders vorteilhaft ist, wenn das Schmal-Bandpass-Interferenzfilter vor einem Referenzdetektor oder / und das Schmal-Bandpass-Interferenzfilter vor einem Strahlungsdetektor mit seinem jeweiligen Durchlassbereich eine Flanke einer Absorptionsbande eines zu detektierenden Gases erfasst. Das bedeutet, dass entweder das Schmal-Bandpass-Interferenzfilter vor einem Referenzdetektor mit seinem jeweiligen Durchlassbereich eine Flanke einer Absorptionsbande eines zu detektierenden Gases erfasst oder das Schmal-Bandpass-Interferenzfilter vor einem Strahlungsdetektor mit seinem jeweiligen Durchlassbereich eine Flanke einer Absorptionsbande eines zu detektierenden Gases erfasst. Es ist auch denkbar, dass beide Schmal-Bandpass-Interferenzfilter, nämlich das Schmal-Bandpass-Interferenzfilter vor einem Referenzdetektor und das Schmal-Bandpass-Interferenzfilter vor einem Strahlungsdetektor, eine Flanke einer Absorptionsbande eines zu detektierenden Gases erfassen, jedoch muss gewährleistet sein, dass einer der Detektoren einen größeren Spektralbereich detektiert als der jeweils andere Detektor, wobei der erste Detektor entlang des Messkanals den kleineren Durchlassbereich aufweisen muss.

Aufgrund der aufgeführten Bedingungen entsteht ein Offset zwischen der Signaldetektion durch den Strahlungsdetektor und der Signaldetektion durch den Referenzstrahlungsdetektor. Dieser Offset ist bedingt durch die größere Bandbreite des Schmal-Bandpass-Interferenzfilters vor dem Referenzdetektor, bzw. ganz allgemein, des Schmal-Bandpass-Interferenzfilters vor dem zweiten Detektor, der dem ersten Detektor entlang des Messkanals nachgeordnet ist.

Störeinflüsse, wie z.B. Intensitätsdriften der Strahlungsquelle, beeinflussen Mess- und Referenzkanal gleichermaßen, so dass sich das Signalverhältnis nicht verändert. Konzentrationsänderungen des Gases führen hingegen zu einer Änderung des Signalverhältnisses. Besonders vorteilhaft ist, dass auf die bisher verwendeten Kompensationsmethoden, wie die Erzeugung unterschiedlicher Absorptionsweglängen oder die Integration einer Sättigungszelle verzichtet werden kann, vergleiche US 8,003,944 B2 und US 8,143,581 B2. Damit ist zum einen eine wesentlich kompaktere und einfachere Bauweise und zum anderen eine deutlich bessere Kompensation von Störeinflüssen realisierbar, wodurch Gasmessgeräte mit deutlich verbesserter Langzeitstabilität und folglich geringeren Wartungskosten erreicht werden.

In einer anderen Ausgestaltung können das Schmal-Bandpass-Interferenzfilter vor einem Strahlungsdetektor und das Schmal-Bandpass-Interferenzfilter vor einem Referenzdetektor derart ausgelegt sein, dass mit ihnen eine zu detektierende Gasabsorptionsbande vollständig erfassbar ist. Auch in diesem Fall ist zu gewährleisten, dass einer der Detektoren einen größeren Spektralbereich detektiert als der jeweils andere entlang des Messkanals nachgeordnete Detektor.

Es ist auch vorteilhaft, wenn das Schmal-Bandpass-Interferenzfilter vor einem Strahlungsdetektor eine erste Zentrumswellenlänge und das Schmal-Bandpass-Interferenzfilter vor einem Referenzdetektor eine zweite Zentrumswellenlänge aufweist, wobei die erste und die zweite Zentrumswellenlänge identisch sind. Wichtig ist, dass die Bandbreiten, d.h. Durchlassbereiche der beiden Schmal-Bandpass-Interferenzfilter unterschiedlich ausgebildet sind und ein Schmal-Bandpass-Interferenzfilter zumindest einen Teil des Spektrums transmittiert, welcher außerhalb der Absorptionsbande des zu detektierenden Gases liegt, damit ein Strahlungsdetektor einen größeren spektralen Strahlungsanteil sieht, um so einen Offset, wie oben beschrieben, zu erzeugen.

Die erste und die zweite Zentrumswellenlänge müssen jedoch nicht identisch sein. Sie können sich auch unterscheiden, wobei es vorteilhaft ist, wenn sich die Zentrumswellenlängen im Bereich der zu detektierenden Gasabsorptionsbande befinden. In Abhängigkeit von dem zu detektierenden Gas und seinem charakteristischen spektralen Absorptionsverhalten muss die Wahl des Schmal-Bandpass-Interferenzfilters vor einem Strahlungsdetektor und des Schmal-Bandpass-Interferenzfilters vor einem Referenzdetektor derart getroffen werden, dass die Erzeugung eines Offsets gewährleistet bleibt.

Die erste und die zweite Zentrumswellenlänge können auch innerhalb der Absorptionsbande des zu detektierenden Gases liegen. Dazu muss der Schmal-Bandpass-Interferenzfilter vor einem Referenzdetektor immer auch einen Teil auf den Strahlungsdetektor transmittieren, der außerhalb der charakteristischen Absorptionsbande des Gases liegt. Beispielsweise detektiert der Referenzdetektor 30% des Transmissionsspektrums, welches außerhalb der Absorptionsbande des zu detektierenden Gases liegt und 70% des Transmissionsspektrums, welches innerhalb der Absorptionsbande des zu detektierenden Gases liegt.

In einer Ausgestaltung können der Strahlungsdetektor und der Referenzstrahlungsdetektor an einem Messort, also beispielsweise in einem Umlenkpunkt entlang des Messkanals nebeneinander angeordnet sein. Damit kann die Messeinrichtung in einer besonders kompakten Bauweise realisiert werden. Zudem liegen beide Detektoren auf derselben Wärmesenke, wodurch sich Umgebungstemperaturschwankungen vollständig kompensieren lassen. Wichtig dabei ist, dass vor jedem Detektor ein Schmal-Bandpass-Interferenzfilter angeordnet ist, wobei der Durchlassbereich des Schmal-Bandpass-Interferenzfilters vor dem Strahlungsdetektor und der Durchlassbereich des Schmal-Bandpass-Interferenzfilters vor dem Referenzdetektor überlappend ausgebildet sind und das Schmal-Bandpass-Interferenzfilter vor dem Referenzdetektor oder das Schmal-Bandpass-Interferenzfilter vor dem Strahlungsdetektor eine größere Bandbreite gegenüber dem jeweils anderen Schmal-Bandpass-Interferenzfilter aufweist.

Besonders vorteilhaft ist, dass die Messeinrichtung modular aufgebaut und der optische Pfad und der Gaswechselwirkungsweg modular verlängerbar sind. Modular bedeutet, dass die Messeinrichtung um eine optische Weglänge L und einen Umlenkpunkt mit einem an diesem Umlenkpunkt befindlichen Schmal-Bandpass-Interferenzfilter und einem Detektor, aber auch wahlweise einen im Umlenkpunkt angeordneten Spiegel, erweiterbar ist, bis beispielsweise eine gewünschte Absorptionsweglänge erreicht wird. Diese Spiegel können z.B. eine planare, konkave oder konvexe Oberfläche besitzen.

Weiterhin kann der optische Pfad gekrümmt und beispielsweise schraubenförmig ausgebildet sein. Damit lässt sich die Bauweise der erfindungsgemäßen Messeinrichtung sehr kompakt gestalten, indem an definierten Stellen des Messpfades Strahlungsdetektoren angeordnet werden, um verschiedene Absorptionsweglängen für zu detektierende Gase einzustellen.

Vorteilhaft ist die Ausgestaltung des Messkanals mit einer nahezu ideal reflektierenden Schicht. Dafür eignen sich insbesondere vergoldete und verchromte Oberflächen sowie spiegelnde Oberflächen aus Aluminium oder Edelstahl. Der Messkanal muss aber nicht zwangsläufig als ein physisch abgegrenzter Raum verstanden werden. Der Messkanal im Sinne dieser Beschreibung ist ein Raum, in dem das zu messende Gas oder Gasgemisch in Wechselwirkung mit der Strahlung der Strahlungsquelle treten kann, z.B. in Form eines Kanals.

Für eine kompakte Bauweise kann die Messeinrichtung mit den Detektoren, dem Messkanal, den Schmal-Bandpass-Interferenzfiltern, den Konzentratoren und den Spiegeln sowie Referenzdetektoren auf einer Leiterplatte integriert angeordnet sein. Die Strahlungsquelle und die Detektoren sind dabei so angeordnet, dass eine möglichst platzsparende und kompakte Anordnung realisiert werden kann. Der Messkanal ist auf der Leiterplatte ausgebildet, z.B. auf der Leiterplatte integriert. Um die Messstrahlung der Strahlungsquelle in den Messkanal zu leiten, wird ein Spiegel zur Umlenkung der Messstrahlung in den Messkanal benutzt. Gleiches gilt für die Strahlumlenkung der Messstrahlung auf die Detektoren an den Umlenkpunkten entlang des optischen Pfades innerhalb des Messkanals. Dafür ist hinter dem Schmal-Bandpass-Interferenzfilter auf den die Messstrahlung zunächst trifft, ein Spiegel o.ä. zur Strahlumlenkung angeordnet, der den transmittierten Strahlungsanteil auf den auf der Leiterplatte angeordneten Detektor lenkt. Damit ist eine wesentlich kompaktere Bauweise realisierbar, da durch die vertikale Integration der Komponenten der Messeinrichtung die horizontale Ausdehnung verringert werden kann, weil beispielsweise die Strahlungsquelle und die Detektoren nicht in einer Ebene mit dem Messkanal angeordnet sein müssen. Der am Schmal-Bandpass-Interferenzfilter reflektierte Teil der Messstrahlung wird weiter entlang des optischen Pfades durch den Messkanal geleitet, bis die Messstrahlung auf ein weiteres Schmal-Bandpass-Interferenzfilter trifft.

In einer besonders vorteilhaften Ausgestaltung der Erfindung ist die Strahlungsquelle ein breitbandiger, eine parallele Strahlung aufweisender Laser. Das hat den Vorteil, dass immer die volle Intensität der Strahlung auf den Detektor an den Umlenkpunkten trifft. Reflexions- und Absorptionsverluste aufgrund von Streuung der Strahlung im Messkanal sind so minimal.

Weiterhin kann in einer besonders vorteilhaften Ausgestaltung der erfindungsgemäßen Messeinrichtung vor die Strahlungsquelle eine Fokussiereinrichtung zur Fokussierung und Parallelisierung der von der Strahlungsquelle, insbesondere wenn kein Laser verwendet wird, abgestrahlten Strahlung angeordnet sein. Dies hat den Effekt, dass die maximale Strahlungsintensität auf die jeweiligen Umlenkpunkte und die an den Umlenkpunkten angeordneten Funktionseinheiten, wie Strahlungsdetektor, Spiegel, Referenzdetektor usw. trifft.

Die Aufgabe der vorliegenden Erfindung wird verfahrensseitig dadurch gelöst, dass eine Messstrahlung in einen das zu messende Gas oder Gasgemisch enthaltenen Messkanal durch die Strahlungsquelle eingeleitet wird, die Messstrahlung auf ein an einem ersten Umlenkpunkt angeordnetes erstes Schmal-Bandpass-Interferenzfilter trifft, wobei nur Strahlung einer durch das erste Schmal-Bandpass-Interferenzfilter vorgegebenen Wellenlänge auf einen dem Schmal-Bandpass-Interferenzfilter nachgeordneten Strahlungsdetektor trifft, der am Schmal-Bandpass-Interferenzfilter reflektierte Anteil der Strahlung entlang des optischen Pfades im Messkanal auf einen zweiten Strahlungsdetektor und/oder Spiegel geleitet wird, wobei anschließend die Auswertung der mit den Strahlungsdetektoren gemessenen Gaskonzentrationen erfolgt. Aufgrund der Ausgestaltung des Messkanals bzw. aufgrund der Charakteristik der Strahlungsquelle wird die Strahlung der Strahlungsquelle direkt auf das Schmal-Bandpass-Interferenzfilter und den nachgeordneten Strahlungsdetektor geleitet. Durch die Anordnung verschiedener Strahlungsdetektoren in den Umlenkpunkten entlang des optischen Pfades ist die gleichzeitige Messung verschiedener Gase bzw. Gaskomponenten eines zu untersuchenden Gasgemisches möglich.

In einer Ausgestaltung des erfindungsgemäßen Verfahrens unter Nutzung der erfindungsgemäßen Messeinrichtung ist ein Referenzdetektor mit einem davor angeordneten Referenz-Schmal-Bandpass-Interferenzfilter im Messkanal nach dem Strahlungsdetektor mit dem Schmal-Bandpass-Interferenzfilter für das zu messende Gas angeordnet, wobei der Referenz-Schmal-Bandpass-Interferenzfilter eine größere Bandbreite als das Schmal-Bandpass-Interferenzfilter des Strahlungsdetektors aufweist, die Transmissionsbereiche der beiden Schmal-Bandpass-Interferenzfilter überlappend ausgebildet sind und der Referenz-Schmal-Bandpass-Interferenzfilter einen umliegenden Teil außerhalb der Absorptionsbande des zu messenden Gases auf den Referenzdetektor transmittieren lässt und zwischen einem Detektorsignal des Strahlungsdetektors und einem Detektorsignal des Referenzdetektors ein Signalverhältnis gebildet und das Signalverhältnis ausgewertet wird und damit eine Abweichung im Signalverhältnis kompensiert werden kann. Wichtig ist, dass für die den Detektoren vorgeordneten Schmal-Bandpass-Interferenzfilter gilt, dass das erste Schmal-Bandpass-Interferenzfilter entlang des Messkanals stets einen kleineren Durchlassbereich als das zweite, d.h. dem ersten Schmal-Bandpass-Interferenzfilter im Messkanal nachgeordnete Schmal-Bandpass-Interferenzfilter, aufweist.

Der Offset wird dadurch erzeugt, dass das Schmal-Bandpass-Interferenzfilter vor einem Referenzdetektor einen größeren Spektralbereich transmittiert und der Referenzdetektor einen Bereich außerhalb der Gasabsorptionsbande detektiert. Spektrale Änderungen, die sich z.B. durch Ablagerungen im optischen Messkanal oder durch Umgebungstemperatureinflüsse sowie Intensitätsdriften und spektrale Änderungen der Strahlungsquelle ergeben, können so kompensiert werden.

Vorteilhaft ist, wenn der Schmal-Bandpass-Interferenzfilter vor einem Referenzdetektor mindestens 30% eines Wellenlängenbereichs transmittiert, der außerhalb der Absorptionsbande des zu messenden Gases liegt. Dieser Bereich kann aber auch kleiner oder größer als 30% sein. Es muss zumindest gewährleistet sein, dass der Referenzstrahlungsdetektor einen größeren spektralen Bereich detektiert als der Strahlungsdetektor und zwar mit einem spektralen Strahlungsanteil der außerhalb der Absorptionsbande des zu detektierenden Gases liegt.

Im Folgenden soll die Erfindung anhand von Ausführungsbeispielen näher erläutert werden.

Die zugehörigen Zeichnungen zeigen

Fig. 1 Schematische Darstellung des prinzipiellen Aufbaus eines einfachen NDIR-Gassensors nach dem Stand der Technik;

Fig. 2 Schematische Darstellung des prinzipiellen Aufbaus eines einfachen NDIR-Gassensors mit Referenzmessung nach dem Stand der Technik;

Fig. 3 Strahlungsintensität mit und ohne Einsatz eines Strahlteilers;

Fig. 4 Schematische Darstellung der erfindungsgemäßen Messeinrichtung zur simultanen Messung unterschiedlicher Gase und Gaskonzentrationen;

Fig. 5 Reflektierte Strahlungsintensität an den sequentiell im Messkanal angeordneten Umlenkpunkten / Bandpass-Interferenzfilter $F_N$ entsprechend den zu detektierenden Gasen;

Fig. 6 Transmissionskurven der beispielhaft eingesetzten Bandpass-Interferenzfilter für verschiedene Gase;

Fig. 7 Schematische Darstellung der erfindungsgemäßen Messeinrichtung mit einer Referenzmessung;

Fig. 8 Schematische Darstellung einer Ausgestaltung einer Messeinrichtung mit optischen Konzentratoren, die vor den Detektoren und wahlweise auch vor der Strahlungsquelle angeordnet sind, wobei eine Anordnung von Konzentratoren vor dem Detektor nicht unter den Schutzumfang der Ansprüche fällt;

Fig. 9 Schematische Darstellung einer Ausgestaltung der erfindungsgemäßen Messeinrichtung mit optischen Spiegeln Sp an ausgewählten Umlenkpunkten N zur Erhöhung der Absorptionsweglänge L;

Fig. 10 Schematische Darstellung einer Ausgestaltung einer Messeinrichtung mit gekrümmtem optischen Pfad, die nicht unter den Schutzumfang der Ansprüche fällt, d.h. einem gekrümmten Messkanal, a) Schnittdarstellung, b) perspektivische Darstellung;

Fig. 11 schematische Darstellung einer Ausgestaltung einer Messeinrichtung, die nicht unter den Schutzumfang der Ansprüche fällt, wobei die Messeinrichtung mit den Detektoren und dem optischen Pfad auf einer Leiterplatte integriert ausgebildet ist, a) perspektivische Draufsicht, b) Seitenansicht;

Fig. 12 Spektraler Verlauf der Transmissionsspektren des Strahlungs-Schmal-Bandpass-Interferenzfilters, des Referenz-Schmal-Bandpass-Interferenzfilters und des zu detektierenden Gases, wobei die Zentrumswellenlängen der Bandpass-Interferenzfilter identisch sind;

Fig. 13 Signalverhältnis zwischen Signal des Strahlungsdetektors und Signal des Referenzdetektors.

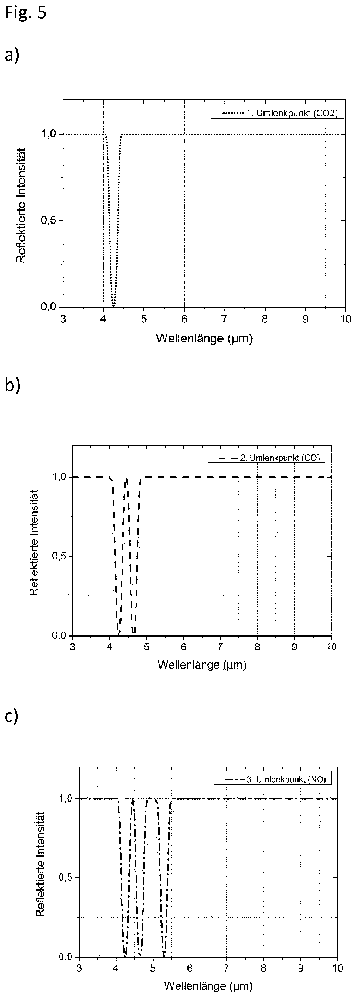

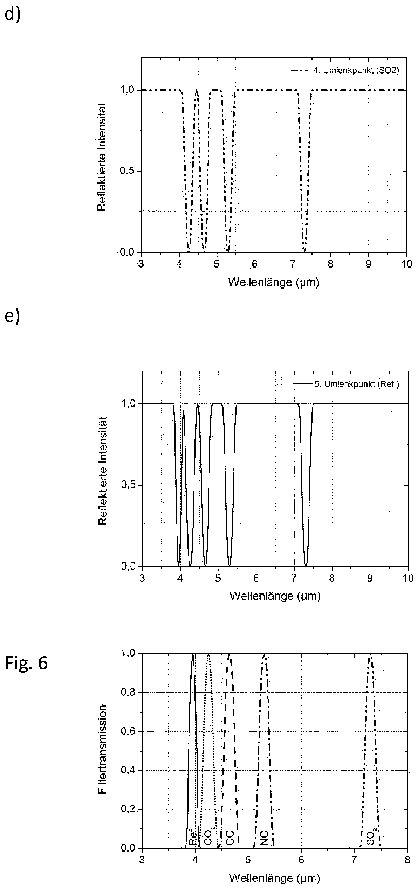

Figur 4 zeigt schematisch eine mögliche Ausführungsform der erfindungsgemäßen Messeinrichtung. Über einen Gaseinlass 4 wird das Gas durch laminare Strömung in den Messkanal 1 eingelassen. Das Gas kann aber auch über die gesamte Länge des optischen Pfades in den Messkanal eingeleitet werden. Der Gaseinlass kann auch als gasdurchlässige Membran ausgebildet sein, wo das Gas von selber in den Messkanal 1 diffundiert. Die IR-Strahlungsquelle S sendet ein Strahlenbündel mit einem kontinuierlichen Spektrum aus, dass z.B. in einem Hohlleiter, dem Messkanal 1, in dem sich das Gas bzw. Gasgemisch befindet, entlang eines optischen Pfades 2 geführt wird und nach einer individuell einstellbaren Weglänge $L_1$ auf ein Schmal-Bandpass-Interferenzfilter $F_1$ unter dem Winkel $\varphi_1$ trifft. Der Ort des Filters definiert einen ersten Umlenkpunkt 6 der Messstrahlung und lässt nur eine bestimmte Wellenlänge bzw. ein sehr schmales Wellenlängenband der Strahlung hindurch und reflektiert den Rest unter dem Winkel $\varphi'_1$ in den Messkanal 1 zurück. Die Transmissionswellenlänge des Filters $F_1$ entspricht dabei der Absorptionswellenlänge eines zu messenden Gases G1. Die Figuren 4, 5 und 6 zeigen an einem Beispiel, die Funktionsweise und Wirkung der Messeinrichtung zur Messung von Gasanteilen in einem zu untersuchenden Gasgemisch, wobei die Gasanteile gleichzeitig an den aufeinanderfolgenden Detektoren D, die an den Umlenkpunkten 6 im Messkanal 1 mit entsprechenden Schmal-Bandpass-Interferenzfiltern F angeordnet sind, detektiert werden. In Figur 5 sind die an den jeweiligen Umlenkpunkten 6 reflektierten Strahlungsintensitäten dargestellt. Das transmittierte Wellenlängenband wird durch das jeweilige Schmal-Bandpass-Interferenzfilter definiert. Der durch das erste Schmal-Bandpass-Interferenzfilter $F_1$ transmittierte Strahlenanteil wird vom Detektor $D_1$ detektiert (Fig. 5a). Der reflektierte Strahlenanteil trifft nach einer Weglänge $L_2$ auf ein weiteres Schmal-Bandpass-Interferenzfilter $F_2$ unter dem Winkel $\varphi_2$ (Fig. 4). An diesem zweiten Umlenkpunkt 6 wird ein weiterer Strahlenanteil eines zu messenden Gases G2 herausgefiltert und vom Detektor $D_2$ gemessen (Fig. 5b). Dies kann so fortgeführt werden (Fig. 5c - e). Aus den Fig. 5a-e wird deutlich, dass immer die volle Strahlungsintensität auf die Detektoren D trifft. Die erforderlichen Schmal-Bandpass-Interferenzfilter F sind entsprechend des zu detektierenden Gasanteils und den erforderlichen Absorptionsweglängen im Messkanal 1 angeordnet. Beispielsweise wird für die Detektion von $SO_2$ eine größere Weglänge L benötigt als für $CO_2$. Über einen Gasauslass 5 kann das Gas den Messkanal wieder verlassen. Auch der Gasauslass 5 kann als gasdurchlässige Membran ausgebildet sein, wo das Gas von selber aus dem Messkanal 1 diffundiert.

Fig. 6 zeigt beispielhaft die Transmissionskurven der eingesetzten Schmal-Bandpass-Interferenzfilter für verschiedene Gase.

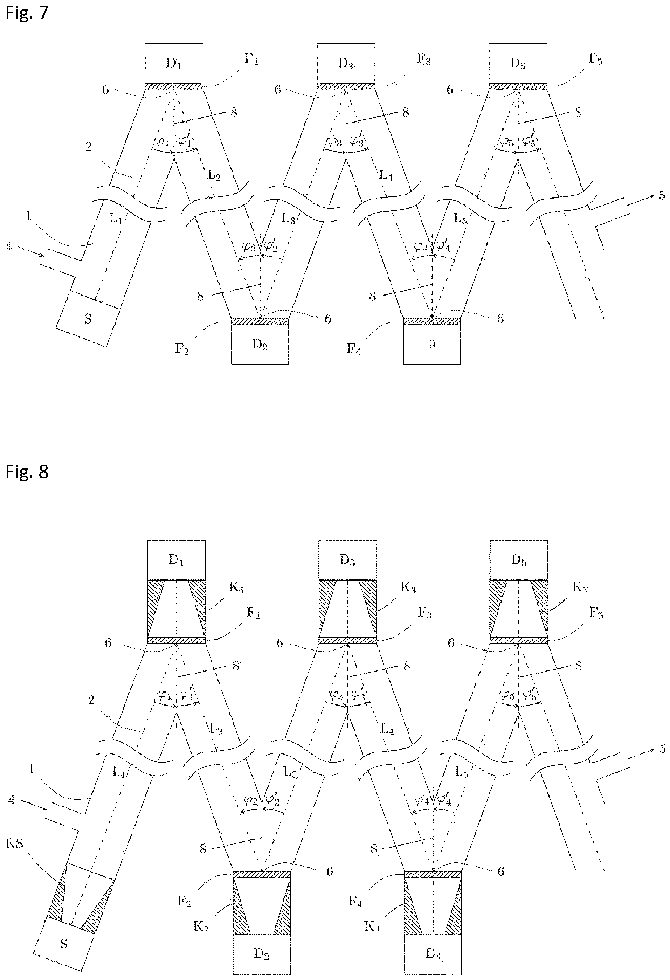

Figur 7 zeigt eine bevorzugte Ausgestaltung der erfindungsgemäßen Messeinrichtung, wobei an einem beliebigen Umlenkpunkt 6 im Messkanal 1 eine Referenzmessung mit einem Referenzdetektor 9 bei einer Wellenlänge erfolgt, bei der keine Absorption durch andere im Gasgemisch oder in der Umgebung vorhandene Gase stattfindet (z.B. bei 3,95 μm). Mit Hilfe dieser Referenzmessung wird eine wesentliche Stabilitätsverbesserung erreicht, wodurch beispielsweise Signaländerungen aufgrund von Intensitätsdriften der Strahlungsquelle S oder Schmutzablagerungen in der Messkammer kompensiert werden können.

In einem Beispiel, das nicht unter den Schutzumfang der Ansprüche fällt, ist an der Strahlungsquelle S ein optischer Konzentrator KS oder ein ähnliches optisches Bauelement (z.B. Spiegel, Linse) angeordnet, wodurch die erzeugte Strahlung in den Messkanal 1 fokussiert wird. Dies ist in Figur 8 schematisch dargestellt. Zusätzlich ist hinter jedem Schmal-Bandpass-Interferenzfilter $F_1$, $F_2$, usw. ein optischer Konzentrator $K_1$, $K_2$, usw. angeordnet, der alle durch das Filter transmittierte Strahlen auf das Detektorelement D fokussiert, damit ein maximales Detektorsignal erzeugt wird.

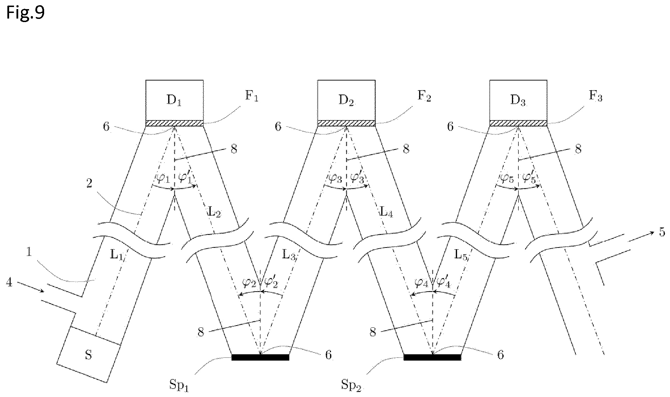

In einer weiteren Variante der erfindungsgemäßen Messeinrichtung kann zur Erhöhung der Absorptionsweglänge L an einem oder mehreren Umlenkpunkten 6 anstelle eines Schmal-Bandpass-Interferenzfilters F ein Spiegel Sp angeordnet sein, der die auftreffende Strahlung vollständig reflektiert, so dass die Strahlung auf den nächsten Umlenkpunkt 6 weitergeleitet wird (Fig. 9).

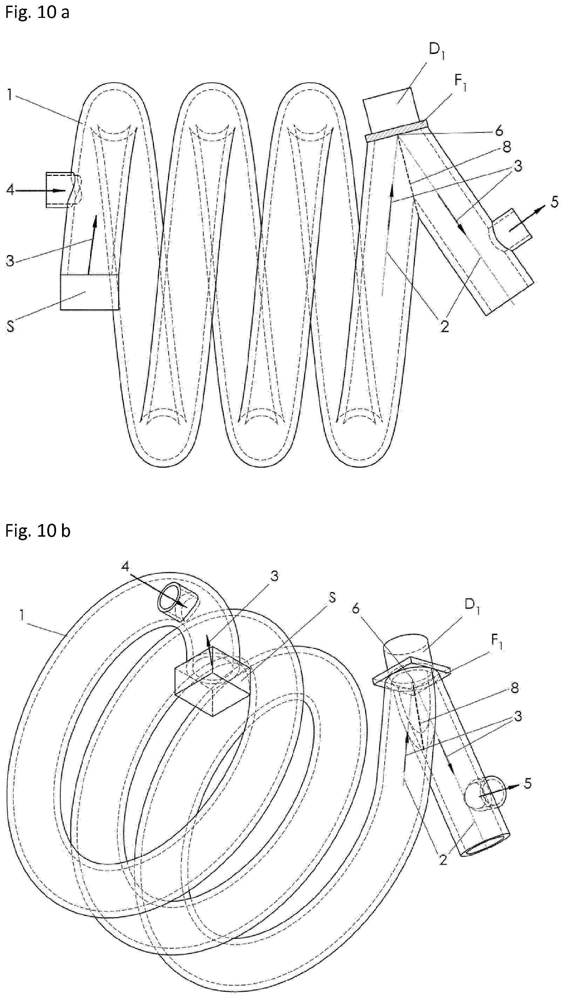

In einer anderen beispielhaften Messeinrichtung, die nicht unter den Schutzumfang der Ansprüche fällt, kann der optische Pfad 2 bzw. der Messkanal 1 eine gekrümmte Bahn aufweisen, die zudem dreidimensional, z.B. schraubenförmig, ausgestaltet sein kann, damit eine möglichst große Absorptionsweglänge L in einem kleinen Volumen untergebracht werden kann. Dies ist schematisch in Figur 10a, b dargestellt. An geeigneten Stellen, d.h. an den Umlenkpunkten 6 entlang des gekrümmten optischen Pfades 2 sind Detektoren D gemäß der Messeinrichtung angeordnet. Durch die gekrümmte Ausgestaltung des optischen Pfades 2 ist eine noch kompaktere Bauweise der Messeinrichtung möglich. Zur Veranschaulichung ist in Fig. 10 a, b nur jeweils ein Detektor D am Messkanal 1 entlang des optischen Pfades 2, und zwar an einem ersten Umlenkpunkt 6, dargestellt.

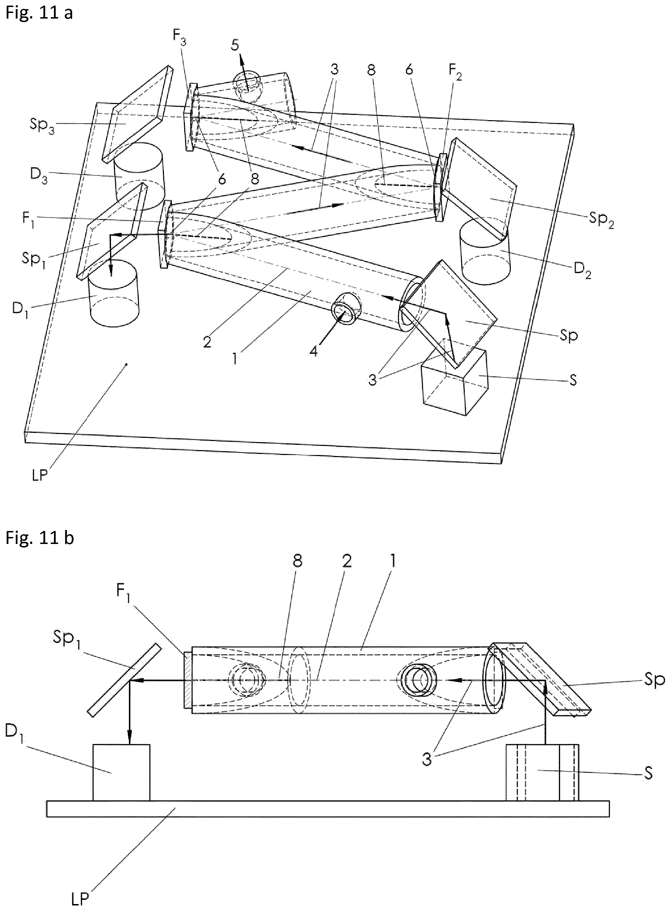

Figur 11 zeigt eine weitere Ausgestaltung einer beispielhaften Messeinrichtung, die nicht unter den Schutzumfang der Ansprüche fällt, wobei die Messeinrichtung mit den Detektoren D und dem optischen Pfad 2, d.h. dem Messkanal 1 auf einer Leiterplatte LP integriert ausgebildet ist. Die Strahlungsquelle S und die Detektoren D sind dabei so angeordnet, dass eine möglichst platzsparende und kompakte Anordnung realisiert werden kann. Der optische Pfad 2, d.h. der Messkanal 1 ist auf der Leiterplatte LP ausgebildet. Um die Messstrahlung 3 der Strahlungsquelle S in den Messkanal 1 zu leiten, wird ein Spiegel Sp zur Umlenkung der Messstrahlung 3 in den optischen Pfad 2 benutzt. Gleiches gilt für die Strahlumlenkung der Messstrahlung 3 auf die Detektoren D an den Umlenkpunkten 6 entlang des Messkanals 1. Dafür ist hinter dem Schmal-Bandpass-Interferenzfilter F, auf den die Messstrahlung zunächst trifft, ein Spiegel Sp o.ä. zur Strahlumlenkung angeordnet, der den transmittierten Strahlungsanteil auf den auf der Leiterplatte LP angeordneten Detektor D lenkt. Damit ist eine wesentlich kompaktere Bauweise realisierbar, da durch die vertikale Integration der Komponenten der Messeinrichtung die horizontale Ausdehnung verringert werden kann. Der am Schmal-Bandpass-Interferenzfilter F reflektierte Teil der Messstrahlung wird weiter entlang des optischen Pfades 2 durch den Messkanal 1 geleitet, bis die Messstrahlung 3 auf ein weiteres Schmal-Bandpass-Interferenzfilter F trifft.

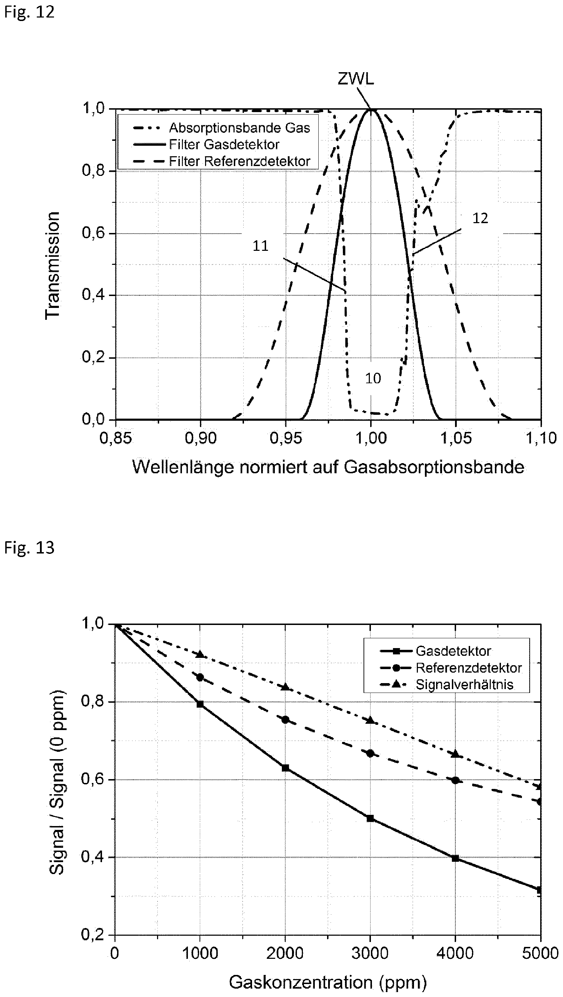

Die Lage des jeweiligen Bandpass-Interferenzfilters des Strahlungs- und Referenzdetektors zur Absorptionsbande des zu untersuchenden Gases ist in Fig. 12 dargestellt. Dabei können die Zentrumswellenlängen der Bandpass-Interferenzfilter F1, F2 zusammenfallen. Wichtig ist, dass die Bandbreiten der beiden Bandpass-Interferenzfilter F1, F2 unterschiedlich ausgebildet sind und ein Bandpass-Interferenzfilter zumindest einen Teil des Spektrums 11, 12 detektiert, welcher außerhalb der Absorptionsbande 10 des zu detektierenden Gases liegt, damit ein Bandpass-Interferenzfilter einen größeren spektralen Strahlungsanteil sieht, um so einen Offset, wie oben beschrieben, zu erzeugen.

Fig. 13 zeigt das Signalverhältnis des Strahlungs- oder Gasdetektors und des Referenzstrahlungsdetektors und des sich daraus ergebenden Signalverhältnisses in Abhängigkeit von der Gaskonzentration. Störeinflüsse, wie z.B. Intensitätsdriften der Strahlungsquelle, beeinflussen Mess-und Referenzkanal gleichermaßen, so dass sich das Signalverhältnis nicht verändert. Konzentrationsänderungen des Gases führen hingegen zu einer Änderung des Signalverhältnisses.

## Messeinrichtung und Verfahren zur Erfassung unterschiedlicher Gase und Gaskonzentrationen

### Bezugszeichenliste

| F | Schmal-Bandpass-Interferenzfilter, kurz: Filter |
| $F_1, F_2, ..., F_N$ | Filter 1, Filter 2, ..., Filter N |
| G | Gas |
| G1, G2, ..., GN | Gas 1, Gas 2, ..., Gas N |
| D | Detektor |
| $D_1, D_2, ..., D_N$ | Detektor 1, Detektor 2, ..., Detektor N |
| S | Strahlungsquelle |
| L | Absorptionsweglänge |
| $L_1, ..., L_N$ | Absorptionsweglänge 1, ... N |
| K | Konzentrator |
| $K_1, ..., K_N$ | Konzentrator 1, ..., Konzentrator N |
| KS | Konzentrator vor der Strahlungsquelle |
| Sp | Spiegel |
| $Sp_1, ..., Sp_N$ | Spiegel 1, ..., Spiegel N |
| LP | Leiterplatte |
| $\varphi$ | Einfallswinkel |
| $\varphi_1, ..., \varphi_N$ | Einfallswinkel am Nten Schmal-BandpassFilter |
| 1 | Messkanal |
| 2 | Optischer Pfad |
| 3 | Ausbreitungsrichtung der Messstrahlung |
| 4 | Gaseinlass |
| 5 | Gasauslass |
| 6 | Umlenkpunkt |
| 8 | Optische Achse |
| 9 | Referenzdetektor |
| 10 | Gasabsorptionsbande |
| 11 | eine Flanke einer Gasabsorptionsbande |
| 12 | eine andere Flanke einer Gasabsorptionsbande |

## Patentansprüche

1. Messeinrichtung zur Erfassung unterschiedlicher Gase und Gaskonzentrationen umfassend eine Strahlungsquelle (S), einen einen optischen Pfad (2) und einen Gaswechselwirkungsweg aufweisenden Messkanal (1) sowie entlang des Messkanals (1) angeordnete Strahlungsdetektoren (D), **dadurch gekennzeichnet, dass** der optische Pfad (2) mindestens einen Umlenkpunkt (6) aufweist, wobei an einem ersten Umlenkpunkt (6) ein erstes Schmal-Bandpass-Interferenzfilter (F) und dem Schmal-Bandpass-Interferenzfilter (F) ein erster Strahlungsdetektor (D) unmittelbar nachgeordnet angeordnet ist und wobei der optische Pfad (2) und der Gaswechselwirkungsweg im Messkanal (1) identisch sind, wobei der optischen Pfad (2) N Umlenkpunkte (6) und von der Strahlungsquelle (S) bis zum N-ten Umlenkpunkt eine Absorptionsweglänge $L = L_1 ...+ L_N$ aufweist, wobei N eine natürliche Zahl größer 1 ist, wobei für jedes Messgas eine individuelle Absorptionsweglänge $L_1, ... L_N$ bereitgestellt wird und unterschiedliche Gase und Gaskonzentrationen zeitgleich erfassbar sind, wobei das Schmal-Bandpass-Interferenzfilter (F) eine optische Achse (8) aufweist, wobei der optische Pfad (2) und die optischen Achse (8) eines N-ten Schmal-Bandpass-Interferenzfilters (F) einen Winkel $\varphi_N$ einschließen, wobei der Winkel $\varphi_N$ eine Größe im Bereich größer 0° bis kleiner 50° aufweist, wobei an einem weiteren Umlenkpunkt ein weiteres Schmal-Bandpass-Interferenzfilter (F) und dem weiteren Schmal-Bandpass-Interferenzfilter (F) ein weiterer Strahlungsdetektor (D) unmittelbar nachgeordnet angeordnet ist .

2. Messeinrichtung nach Anspruch 1, **dadurch gekennzeichnet, dass** der optische Pfad (2) von der Strahlungsquelle (S) bis zum ersten Umlenkpunkt

(6) eine Absorptionsweglänge $L_1$ aufweist.

3. Messeinrichtung nach einem der vorherigen Ansprüche,
   **dadurch gekennzeichnet, dass** der optische Pfad (2) gekrümmt, insbesondere schraubenförmig ausgebildet ist.

4. Messeinrichtung nach Anspruch 1, **dadurch gekennzeichnet, dass** die Strahlungsquelle (S) ein breitbandiger, eine parallele Strahlung aufweisender Laser ist.

5. Messeinrichtung nach einem der vorherigen Ansprüche,
   **dadurch gekennzeichnet, dass** vor der Strahlungsquelle (S) eine Fokussiereinrichtung zur Fokussierung oder Parallelisierung der von der Strahlungsquelle (S) abgestrahlten Strahlung angeordnet ist.

6. Messeinrichtung nach einem der vorherigen Ansprüche, **dadurch gekennzeichnet, dass** das Substratmaterial des Schmal-Bandpass-Interferenzfilters (F) aus Silizium, Germanium, Calciumfluorid, Bariumfluorid oder Zinkselenid besteht.

7. Messeinrichtung nach einem der vorherigen Ansprüche, **dadurch gekennzeichne**t, dass ein optischer Spiegel (Sp) zur Verlängerung des optischen Pfades (2) an einem zweiten weiteren Umlenkpunkt anordbar ist und der Spiegel (Sp) eine planare oder konkave oder konvexe Oberfläche aufweist.

8. Messeinrichtung nach einem der vorherigen Ansprüche, **dadurch gekennzeichnet, dass** an einem zweiten weiteren Umlenkpunkt ein Referenzdetektor (9) anordbar ist.

9. Messeinrichtung nach einem der vorherigen Ansprüche, **dadurch gekennzeichnet, dass** die Messeinrichtung modular aufgebaut und der optische Pfad (2) und der Gaswechselwirkungsweg modular verlängerbar sind.

10. Verfahren zur Messung von Gasen und Gaskonzentrationen, welches die Messeinrichtung gemäß den Ansprüchen 1 bis 9. nutzt, wobei das Verfahren folgende Schritte aufweist:

    - Einleiten einer Messstrahlung in einen das zu messende Gas oder Gasgemisch enthaltenen Messkanal (1),
    - Auftreffen der Messstrahlung auf ein an einem ersten Umlenkpunkt (6) angeordnetes erstes Schmal-Bandpass-Interferenzfilter (F), wobei nur Strahlung einer durch das erste Schmal-Bandpass-Interferenzfilter (F) vorgegebenen Wellenlänge auf einen dem Schmal-Bandpass-Interferenzfilter (F) unmittelbar nachgeordneten Strahlungsdetektor (D) trifft,
    - Weiterleitung der am Schmal-Bandpass-Interferenzfilter (F) reflektierten Strahlung entlang des optischen Pfades (2) im Messkanal (1) auf einen weiteren Schmal-Bandpass-Interferenzfilter mit einem weiteren unmittelbar nachgeordneten Strahlungsdetektor (D) und
    - Auswertung der mit den Strahlungsdetektoren (D) gemessenen Gaskonzentrationen.

11. Verfahren zur Messung von Gasen und Gaskonzentrationen nach Anspruch 10, **dadurch gekennzeichnet, dass** ein Referenzdetektor (D) mit einem davor angeordneten Referenz-Schmal-Bandpass-Interferenzfilter (F) im Messkanal (1) nach dem Strahlungsdetektor (D) mit dem Schmal-Bandpass-Interferenzfilter (F) für das zu messende Gas angeordnet wird, wobei der Referenz-Schmal-Bandpass-Interferenzfilter (F) eine größere Bandbreite als das Strahlungs-Schmal-Bandpass-Interferenzfilter (F) des Strahlungsdetektors (D) aufweist, die Transmissionsbereiche der beiden Schmal-Bandpass-Interferenzfilter (F) überlappend ausgebildet sind und der Referenz-Schmal-Bandpass-Interferenzfilter (F) einen umliegenden Teil außerhalb der Absorptionsbande des zu messenden Gases auf den Referenzdetektor (9, D) transmittieren lässt und zwischen einem Detektorsignal des Strahlungsdetektors (D) und einem Detektorsignal des Referenzdetektors (9, D) ein Signalverhältnis gebildet wird, das Signalverhältnis ausgewertet wird und damit eine Abweichung im Signalverhältnis kompensiert wird.

**Claims**

1. Measuring device for detecting different gases and gas concentrations, comprising a radiation source (S), a measuring channel (1) having an optical path (2) and a gas interaction path, and radiation detectors (D) arranged along the measuring channel (1), **characterized in that** the optical path (2) has at least one deflection point (6), wherein a first narrow bandpass interference filter (F) is arranged at a deflection point (6) and a first radiation detector (D) is arranged immediately downstream of the first narrow bandpass interference filter (F), and wherein the optical path (2) and the gas interaction path in the measuring channel (1) are identical, wherein the optical path (2) has N deflection points (6) and an absorption path length $L = L_1 ... + L_N$ from the radiation source (S) up to the Nth deflection point, wherein N is a natural number greater than 1, wherein an individual absorption path length $L_1, ... L_N$ is provided for each sample gas and different gases and gas concentrations can be detected simultaneously, wherein the narrow bandpass interference filter (F) has an optical axis (8), wherein the optical path (2) and the optical axis (8) of an N-th narrow bandpass interference filter (F) enclose an angle $\varphi_N$, wherein the angle $\varphi_N$ has a size in the range greater than 0° to less than 50°, wherein a further narrow bandpass interference filter (F) is arranged at a further deflection point and a further radiation detector (D) is arranged immediately downstream of the further narrow bandpass interference filter (F).

2. Measuring device according to claim 1, **characterized in that** the optical path (2) has an absorption path length $L_1$ from the radiation source (S) to the first deflection point (6).

3. Measuring device according to one of the preceding claims, **characterized in that** the optical path (2) is curved, in particular helical.

4. Measuring device according to claim 1, **characterized in that** the radiation source (S) is a broadband laser with parallel radiation.

5. Measuring device according to one of the preceding claims, **characterized in that** a focusing device for focusing or parallelizing the radiation emitted by the radiation source (S) is arranged in front of the radiation source (S).

6. Measuring device according to one of the preceding claims, **characterized in that** the substrate material of the narrow bandpass interference filter (F) consists of silicon, germanium, calcium fluoride, barium fluoride, or zinc selenide.

7. Measuring device according to one of the preceding claims, **characterized in that** an optical mirror (Sp) for extending the optical path (2) can be arranged at a second further deflection point and the mirror (Sp) has a planar or concave or convex surface.

8. Measuring device according to one of the preceding claims, **characterized in that** a reference detector (9) can be arranged at a second further deflection point.

9. Measuring device according to one of the preceding claims, **characterized in that** the measuring device is constructed modularly and the optical path (2) and the gas interaction path are modularly extendable.

10. A method of measuring gases and gas concentrations, which uses the measuring device according to claims 1 to 9, the method comprising the following steps:

- Introduction of a measurement radiation into a measuring channel (1) containing the gas or gas mixture to be measured,
- Incidence of the measurement radiation on a first narrow bandpass interference filter (F) arranged at a first deflection point (6), wherein only radiation of a wavelength specified by the first narrow bandpass interference filter (F) is incident on a radiation detector (D) arranged immediately downstream of the narrow bandpass interference filter (F),
- Relay of the radiation reflected at the first narrow bandpass interference filter (F) along the optical path (2) in the measuring channel (1) to a further narrow bandpass interference filter with a further radiation detector (D) arranged immediately downstream, and
- Evaluation of the gas concentrations measured using the radiation detectors (D).

11. Method for measuring gases and gas concentrations according to claim 10, **characterized in that** a reference detector (D) with a reference narrow-bandpass interference filter (F) arranged in front of the reference detector (D) is arranged in the measuring channel (1) after the radiation detector (D) with the narrow bandpass interference filter (F) for the gas to be measured, wherein the reference narrow bandpass interference filter (F) has a greater bandwidth than the narrow bandpass interference filter (F) of the radiation detector (D), the transmission ranges of the two narrow bandpass interference filters (F) are designed to overlap and the reference narrow bandpass interference filter (F) allows a surrounding part outside the absorption band of the gas to be measured to be transmitted to the reference detector (9, D), and a signal ratio is formed between a detector signal of the radiation detector (D) and a detector signal of the reference detector (9, D), the signal ratio is evaluated and a deviation in the signal ratio is thus compensated.

## Revendications

1. Dispositif de mesure pour détecter différents gaz et concentrations de gaz, comprenant une source de rayonnement (S), un canal de mesure (1) ayant un chemin optique (2) et un chemin d'interaction avec le gaz, et des détecteurs de rayonnement (D) disposés le long du canal de mesure (1), **caractérisé en ce que** le chemin optique (2) a au moins un point de déviation (6), dans lequel un premier filtre d'interférence à bande passante étroite (F) est placé à un point de déviation (6) et un premier détecteur de rayonnement (D) est placé immédiatement en aval du premier filtre d'interférence à bande passante étroite (F), et dans lequel le chemin optique (2) et le chemin d'interaction avec le gaz dans le canal de mesure (1) sont identiques, dans lequel le trajet optique (2) a N points de déviation (6) et une longueur de chemin d'absorption L = L $_1$...+ L$_N$ depuis la source de rayonnement (S) jusqu'au N-ième point de déviation, N étant un nombre naturel supérieur à 1, une longueur de trajet d'absorption individuelle L$_1$, ... L$_N$ est fournie pour chaque échantillon de gaz et différents gaz et concentrations de gaz peuvent être détectés simultanément, dans lequel le filtre d'interférence à bande passante étroite (F) a un axe optique (8), dans lequel le trajet optique (2) et l'axe optique (8) d'un N-ième filtre d'interférence à bande passante étroite (F) englobent un angle $\varphi_N$, dans lequel l'angle $\varphi_N$ a une taille comprise entre plus de 0° et moins de 50°, dans lequel un autre filtre d'interférence à bande passante étroite (F) est disposé à un autre point de déviation et un autre détecteur de rayonnement (D) est disposé immédiatement en aval de l'autre filtre d'interférence à bande passante étroite (F).

2. Dispositif de mesure selon la revendication 1, **caractérisé en ce que** le trajet optique (2) a une longueur de trajet d'absorption L$_1$ de la source de rayonnement (S) au premier point de déviation (6).

3. Dispositif de mesure selon l'une des revendications précédentes, **caractérisé en ce que** le trajet optique (2) est courbe, en particulier hélicoïdal

4. Dispositif de mesure selon la revendication 1, **caractérisé en ce que** la source de rayonnement (S) est un laser à large bande à rayonnement parallèle.

5. Dispositif de mesure selon l'une des revendications précédentes, **caractérisé en ce qu'**un dispositif de focalisation pour focaliser ou paralléliser le rayonnement émis par la source de rayonnement (S) est disposé devant la source de rayonnement (S).

6. Dispositif de mesure selon l'une des revendications précédentes, **caractérisé en ce que** le matériau du substrat du filtre d'interférence à bande passante étroite (F) est constitué de silicium, de germanium, de fluorure de calcium, de fluorure de baryum ou de séléniure de zinc.

7. Dispositif de mesure selon l'une des revendications précédentes, **caractérisé en ce qu'**un miroir optique (Sp) destiné à prolonger le trajet optique (2) peut être disposé à un deuxième point de déviation supplémentaire et que le miroir (Sp) présente une surface plane ou concave ou convexe.

8. Dispositif de mesure selon l'une des revendications précédentes, **caractérisé en ce qu'**un détecteur de référence (9) peut être placé à un deuxième point de déviation supplémentaire.

9. Dispositif de mesure selon l'une des revendications précédentes, **caractérisé en ce que** le dispositif de mesure est construit de manière modulaire et que le trajet optique (2) et le trajet d'interaction avec le gaz sont modulairement extensibles.

10. Méthode de mesure des gaz et des concentrations de gaz, utilisant le dispositif de mesure selon les revendications 1 à 9, la méthode comprenant les étapes suivantes:

- Introduction d'un rayonnement de mesure dans un canal de mesure (1) contenant le gaz ou le mélange de gaz à mesurer,
- Incidence du rayonnement de mesure sur un premier filtre d'interférence à bande passante étroite (F) disposé à un premier point de déviation (6), dans lequel seul le rayonnement d'une longueur d'onde spécifiée par le premier filtre d'interférence à bande passante étroite (F) est incident sur un détecteur de rayonnement (D) disposé immédiatement en aval du filtre d'interférence à bande passante étroite (F),
- Relais du rayonnement réfléchi sur le premier filtre d'interférence à bande passante étroite (F) le long du trajet optique (2) dans le canal de mesure (1) vers un autre filtre d'interférence à bande passante étroite avec un autre détecteur de rayonnement (D) placé immédiatement en aval, et
- Évaluation des concentrations de gaz mesurées à l'aide des détecteurs de rayonnement (D)

11. Procédé de mesure de gaz et de concentrations de gaz selon la revendication 10, **caractérisé en ce qu'**un détecteur de référence (D) avec un filtre d'interférence à bande passante étroite de référence (F) placé devant le détecteur de référence (D) est placé dans le canal de mesure (1) après le détecteur de rayonnement (D) avec le filtre d'interférence à bande passante étroite (F) pour le gaz à mesurer, dans lequel le filtre d'interférence à bande passante étroite de référence (F) a une plus grande largeur de bande que le filtre d'interférence à bande passante étroite (F) du détecteur de rayonnement (D), les plages de transmission des deux filtres d'interférence à bande passante étroite (F) sont conçues pour se chevaucher et le filtre d'interférence à bande passante étroite de référence (F) permet à une partie environnante située en dehors de la bande d'absorption du gaz à mesurer d'être transmise au détecteur de référence (9, D), et un rapport de signal est formé entre un signal de détecteur du détecteur de rayonnement (D) et un signal de détecteur du détecteur de référence (9, D), le rapport de signal est évalué et une déviation dans le rapport de signal est ainsi

compensée.

Fig. 1 (Stand der Technik)

Fig. 2 (Stand der Technik)

## Fig. 3 (Stand der Technik)

## Fig. 4

Fig. 5

a)

b)

c)

d)

e)

Fig. 6

Fig. 7

Fig. 8

Fig.9

Fig. 10 a

Fig. 10 b

Fig. 11 a

Fig. 11 b

Fig. 12

Fig. 13

**IN DER BESCHREIBUNG AUFGEFÜHRTE DOKUMENTE**

**In der Beschreibung aufgeführte Patentdokumente**

- DE 730478
- DE 10221708 B4
- DE 10013374 A1
- DE 102008005572 B4
- DE 202005010475 U1
- DE 29602282 U1
- US 20120235038 A1
- DE 3406175 A1
- DE 4133481 A1
- US 6201245 B1
- DE 10140998 C2
- DE 19604167 A1
- US 5222389 A
- KR 1020100052691 A
- US 3797942 A
- US 8003944 B2
- US 8143581 B2